(19) **Europäisches Patentamt European Patent Office Office européen des brevets**

(11) **EP 4 704 207 A1**

(12) **EUROPEAN PATENT APPLICATION**
published in accordance with Art. 153(4) EPC

(43) Date of publication:
04.03.2026 Bulletin 2026/10

(21) Application number: 23936431.8

(22) Date of filing: 22.11.2023

(51) International Patent Classification (IPC):
$H01M\ 10/0567^{(2010.01)}$    $H01M\ 10/0525^{(2010.01)}$
$H01M\ 10/42^{(2006.01)}$

(52) Cooperative Patent Classification (CPC):
Y02E 60/10

(86) International application number:
PCT/CN2023/133387

(87) International publication number:
WO 2024/230127 (14.11.2024 Gazette 2024/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.05.2023 CN 202310497085

(71) Applicant: Contemporary Amperex Technology
Co., Limited
Ningde, Fujian 352100 (CN)

(72) Inventors:
• ZHANG, Cuiping
Ningde, Fujian 352100 (CN)
• HAN, Changlong
Ningde, Fujian 352100 (CN)
• FAN, Peng
Ningde, Fujian 352100 (CN)

(74) Representative: Lorenz Seidler Gossel Part. mbB
Widenmayerstr. 23
80538 München (DE)

(54) **ELECTROLYTE, LITHIUM SECONDARY BATTERY, AND ELECTRICAL APPARATUS**

(57) The present application provides an electrolyte, a lithium secondary battery, and an electric apparatus. The electrolyte includes additives, where the additives include a first additive containing a trimethylsilyl group, a second additive containing lithium ions, and a third additive containing an ester group. By adding these three additives to the electrolyte, the present application can effectively reduce the initial DCR of the battery, improve initial power performance, and enhance the cycling performance and storage performance of the battery.

FIG. 1

EP 4 704 207 A1

## Description

## TECHNICAL FIELD

The present application relates to the field of lithium battery technology, and more particularly, to an electrolyte, a lithium secondary battery, and an electric apparatus.

## BACKGROUND

Lithium-ion batteries have attracted significant attention due to their high specific energy, long cycle life, low self-discharge, and good safety performance. Currently, lithium-ion batteries dominate the portable electronics market, and their applications have penetrated various aspects of daily life, such as cameras, laptops, and electric vehicles.

During the initial charge and discharge process of lithium-ion batteries, the electrode material reacts with the electrolyte at the solid-liquid interface, forming a passivation layer covering the surface of the electrode material. This passivation layer is an interfacial layer with characteristics of a solid electrolyte, acting as an electronic insulator but an excellent conductor for $Li^+$. $Li^+$ can freely intercalate and deintercalate through this passivation layer. The passivation layer formed on the anode side is referred to as the "solid electrolyte interface" (SEI) film, abbreviated as SEI film. The passivation layer formed on the cathode side is referred to as the "cathode electrolyte interphase" (CEI) film, abbreviated as CEI film. High-quality CEI and SEI films can effectively prevent continuous reactions between the electrode material and the electrolyte at the anode and cathode surfaces, thereby protecting the anode and cathode. Adding suitable additives to the electrolyte can facilitate the formation of high-quality CEI and SEI films on the anode and cathode surfaces.

Therefore, there is an urgent need to develop an additive or additive combination capable of improving the overall performance of lithium-ion batteries.

## SUMMARY

In view of the above objectives, a first aspect of the present application provides an electrolyte for a lithium secondary battery, including additives, where the additives include a first additive containing a trimethylsilyl group, a second additive containing lithium ions, and a third additive containing an ester group.

The first additive containing a trimethylsilyl group can participate in anode interface film formation during the formation and cyclic storage processes of an electrochemical energy storage apparatus, effectively reducing the initial direct current resistance (DCR) of the secondary battery and improving the initial power performance of the battery. The third additive containing an ester group can also participate in anode interface film formation during the formation and cyclic storage processes of an electrochemical energy storage apparatus, effectively suppressing the occurrence of side reactions at the anode interface. The second additive containing lithium ions can participate in cathode interface film formation, effectively suppressing the occurrence of side reactions at the cathode interface during the cyclic storage process of an electrochemical energy storage apparatus, thereby suppressing DCR growth during the cycling process of the electrochemical energy storage apparatus. The combined use of the first additive, the second additive, and the third additive can achieve the purpose of improving the power performance, storage performance, and cycling performance of the electrochemical energy storage apparatus.

In any embodiment, the first additive includes trimethylfluorosilane and/or tris(trimethylsilyl) phosphate.

In any embodiment, the second additive includes one or more of lithium difluorophosphate, lithium fluorosulfonate, and lithium difluorobis(oxalato)phosphate.

In any embodiment, the third additive includes a sulfur-containing compound and/or a cyclic carbonate compound. In any embodiment, the third additive includes one or more of ethylene sulfate, 1,3-propane sultone, fluoroethylene carbonate, and vinylene carbonate.

In any embodiment, a ratio of a mass percentage W2 of the second additive in the electrolyte to a mass percentage W1 of the first additive in the electrolyte is 0.02-20.

In any embodiment, a ratio of a mass percentage W2 of the second additive in the electrolyte to a mass percentage W1 of the first additive in the electrolyte is 1-20.

When the ratio of the mass percentages of the first additive to the second additive is within a suitable range, the electrochemical energy storage apparatus can achieve excellent power performance, storage performance, and cycling performance.

In any embodiment, a ratio of a mass percentage W3 of the third additive in the electrolyte to the mass percentage W1 of the first additive in the electrolyte is 0.2-40.

In any embodiment, a ratio of the mass percentage W3 of the third additive in the electrolyte to the mass percentage W1 of the first additive in the electrolyte is 2-20.

When the ratio of the mass percentages of the second additive to the third additive is within a suitable range, the electrochemical energy storage apparatus has a reduced DCR value and excellent initial power performance.

In any embodiment, the additives satisfy one of the following conditions:

$$(1)\ 0.05\% \le W1 \le 0.5\%;$$

$$(2)\ 0.01\% \le W2 \le 1\%;$$

and

$$(3)\ 0.1\% \le W3 \le 2\%.$$

In any embodiment, the additives satisfy the following conditions:

$$(1)\ 0.15\% \le W1 \le 0.5\%;$$

$$(2)\ 0.01\% \le W2 \le 0.6\%;$$

and

$$(3)\ 0.1\% \le W3 \le 1.2\%.$$

Controlling the mass percentages of the first additive, the second additive, and the third additive in the electrolyte within suitable ranges can effectively suppress side reactions at the cathode interface and anode interface of the electrochemical energy storage apparatus, suppress DCR growth during the cycling process of the electrochemical energy storage apparatus, and improve the power performance, storage performance, and cycling performance of the electrochemical energy storage apparatus.

In any embodiment, the electrolyte further includes an electrolytic salt. In any embodiment, a total concentration of the electrolytic salt in the electrolyte is 0.6 mol/L-1.5 mol/L. In any embodiment, a total concentration of the electrolytic salt in the electrolyte is 0.8 mol/L-1.3 mol/L or 0.9 mol/L-1.2 mol/L.

When the concentration of the electrolytic salt in the electrolyte is within a suitable range, the electrolyte has good viscosity and excellent ionic conductivity. This electrolyte allows the electrochemical energy storage apparatus to achieve excellent power performance, good cycling performance, and storage performance.

In any embodiment, the electrolytic salt includes one or more of $LiPF_6$, $LiBF_4$, LiFSI, LiBOB, LiDFOB, $LiPO_2F_2$, LiDFOP, LiTFOP, $LiAsF_6$, $Li(FSO_2)_2N$, $LiCF_3SO_3$, and $LiClO_4$.

In any embodiment, the electrolytic salt includes $LiPF_6$ and/or LiFSI.

In any embodiment, the electrolytic salt includes $LiPF_6$ and LiFSI, with a molar ratio of $LiPF_6$ to LiFSI being (2-6):1.

In any embodiment, the electrochemical energy storage apparatus includes a secondary battery.

A second aspect of the present application provides a lithium secondary battery, including a positive electrode plate, a negative electrode plate, and the electrolyte according to the first aspect of the present application.

In any embodiment, the positive electrode plate includes a positive electrode active material, where the positive electrode active material includes one or more of $Li_d[Ni_xCo_yXl_zMl_{1-x-y-z}]O_2$, $LiMn_2O_4$, $Li_2MnO_3\cdot(1-a)LiAO_2$, and $LiM2\text{-}X2O_4$,

where $0.1 \le d \le 1$, and X1 includes Mn and/or Al; M1 includes one or more of Co, Ni, Mn, Mg, Cu, Zn, Al, Sn, B, Ga, Cr, Sr, V, and Ti, $0 \le x < 1$, $0 \le y \le 1$, $0 \le z \le 1$, and $x + y + z \le 1$; A includes one or more of Ni, Co, and Mn, and $0 < a < 1$; M2 includes one or more of Fe, Mn, Ni, and Co; and X2 in $X2O_4^{h-}$ includes one or more of S, P, As, V, Mo, and W, and h = 2 or 3.

In any embodiment, a compacted density of a film layer of the positive electrode plate is 3.0 $g/cm^3$-3.8 $g/cm^3$.

In any embodiment, a compacted density of a film layer of the positive electrode plate is 3.2 $g/cm^3$-3.6 $g/cm^3$.

In any embodiment, the negative electrode plate includes a negative electrode active material, where the negative electrode active material includes at least one of artificial graphite, natural graphite, soft carbon, hard carbon, mesocarbon microbeads, silicon-based materials, and tin-based materials.

In any embodiment, a compacted density of a film layer of the negative electrode plate is 1.2 $g/cm^3$-2.0 $g/cm^3$.

In any embodiment, a compacted density of a film layer of the negative electrode plate is 1.4 $g/cm^3$-1.7 $g/cm^3$.

When the compacted densities of the positive electrode plate and the negative electrode plate of the secondary battery are within suitable ranges, it contributes to increasing the energy density of the secondary battery, resulting in a secondary battery with increased capacity.

The cathode and anode interfaces of the secondary battery have high-performance passivation films with low impedance, resulting in good cycling performance and storage performance.

A third aspect of the present application provides an electric apparatus, including the lithium secondary battery according to the second aspect of the present application.

**BRIEF DESCRIPTION OF DRAWINGS**

FIG. 1 is a schematic diagram of a lithium secondary battery according to an embodiment of the present application;
FIG. 2 is an exploded view of the lithium secondary battery according to the embodiment of the present application shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded view of the battery pack according to the embodiment of the present application shown in FIG. 4; and
FIG. 6 is a schematic diagram of an electric apparatus using a lithium secondary battery as a power source according to an embodiment of the present application.

Description of reference signs:

1. battery pack; 2. upper box body; 3. lower box body; 4. battery module; 5. lithium secondary battery; 51. housing; 52. electrode assembly; and 53. cover plate.

**DESCRIPTION OF EMBODIMENTS**

Hereinafter, embodiments specifically disclosing the electrolyte, lithium secondary battery, and electric apparatus of the present application are described in detail with appropriate reference to the drawings. However, unnecessary detailed descriptions may be omitted. For example, detailed descriptions of well-known matters or redundant descriptions of substantially identical structures may be omitted. This is to avoid unnecessarily prolonging the following description and to facilitate understanding by those skilled in the art. Additionally, the drawings and the following description are provided for those skilled in the art to fully understand the present application and are not intended to limit the subject matter recited in the claims.

The "range" disclosed in the present application is defined in the form of a lower limit and an upper limit, where a given range is defined by selecting a lower limit and an upper limit, and the selected lower limit and upper limit define the boundaries of a particular range. Ranges defined in this manner may include or exclude the endpoints and may be arbitrarily combined, meaning any lower limit may be combined with any upper limit to form a range. For example, if ranges of 60-120 and 80-110 are listed for a particular parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise specified, a numerical range "a-b" represents an abbreviated representation of any real number combination between a and b, where both a and b are real numbers. For example, the numerical range "0-5" means that all real numbers between "0-5" have been listed herein, and "0-5" is merely an abbreviated representation of these numerical combinations. Additionally, when a parameter is expressed as an integer $\geq 2$, it is equivalent to disclosing that the parameter is, for example, an integer of 2, 3, 4, 5, 6, 7, 8, 9, 10, 11, or 12.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps mentioned in the present application may be performed sequentially or randomly, preferably sequentially. For example, a method including steps (a) and (b) indicates that the method may include steps (a) and (b) performed sequentially or steps (b) and (a) performed sequentially. For example, if the method further includes step (c), it indicates that step (c) may be added to the method in any ordinal position. For example, the method may include steps (a), (b), and (c), steps (a), (c), and (b), or steps (c), (a), and (b).

Unless otherwise specified, the terms "include" and "comprise" mentioned in the present application indicate an open-ended or closed-ended inclusion. For example, "include" and "comprise" may indicate that other components not listed may also be included or comprised, or only the listed components may be included or comprised.

Unless otherwise specified, in the present application, the term "or" is inclusive. For example, the phrase "A or B" means "A, B, or both A and B." More specifically, any of the following conditions satisfy the condition "A or B": A is true (or present) and B is false (or absent); A is false (or absent) and B is true (or present); or both A and B are true (or present).

Additives containing a trimethylsilyl group are one of the widely used additive types in lithium-ion battery electrolytes, capable of forming a film at the battery anode interface but unable to suppress side reactions at the anode interface. During battery cycling, side reactions at the cathode interface and anode interface lead to the deposition of electrolyte decomposition products at the cathode and anode interfaces, blocking lithium-ion transport, increasing DCR, and thus affecting the improvement of battery power performance. Additionally, these side reactions are often accompanied by the consumption of active lithium, leading to a decline in battery cycling performance and storage performance.

[Electrolyte]

Based on this, the present application proposes an electrolyte for a lithium secondary battery, including additives, where the additives include a first additive containing a trimethylsilyl group, a second additive containing lithium ions, and a third additive containing an ester group.

In the present application, the term "electrolyte" refers to a carrier for ion transport in a lithium-ion battery.

In the present application, the term "additive" refers to a component with a relatively low percentage in the electrolyte, which may be a gas, liquid, or solid. Conceptually, the distinction between the additive, the solvent, and the lithium salt (or electrolytic salt) lies primarily in their differing percentages in the electrolyte.

In the present application, the term "trimethylsilyl group" refers to the $-Si(CH_3)_3$ group.

In the present application, the term "ester group" refers to a -COOR group, where R is selected from a substituted or unsubstituted $C_{1-5}$ alkyl group.

In the present application, the term "$C_{1-5}$ alkyl group" refers to a straight or branched hydrocarbon chain group consisting solely of carbon and hydrogen atoms, containing no unsaturated bonds, having one to five carbon atoms, and attached to the rest of the molecule via a single bond. Examples of the $C_{1-5}$ alkyl group include, but are not limited to, methyl group, ethyl group, n-propyl group, 1-methylethyl (isopropyl) group, butyl group, and pentyl group.

In the present application, the term "substituted" means that at least one hydrogen atom of the compound or chemical moiety is replaced by substituents of another chemical moiety, where the substituents are each independently selected from hydroxyl group, mercapto group, amino group, cyano group, nitro group, aldehyde group, halogen atom, alkenyl group, alkynyl group, aryl group, heteroaryl group, $C_{1-6}$ alkyl group, and $C_{1-6}$ alkoxy group.

In some embodiments, the first additive is trimethylfluorosilane and/or tris(trimethylsilyl) phosphate.

In some embodiments, the second additive includes one or more of lithium difluorophosphate, lithium fluorosulfonate, lithium bis(oxalato)borate, lithium difluoro(oxalato)borate, lithium difluorobis(oxalato)phosphate, and lithium tetrafluoroborate.

In some embodiments, the second additive includes one or more of lithium difluorophosphate, lithium fluorosulfonate, and lithium difluorobis(oxalato)phosphate.

In some embodiments, the third additive includes a sulfur-containing compound and/or a cyclic carbonate compound. In some embodiments, the third additive includes one or more of ethylene sulfate, 1,3-propane sultone, fluoroethylene carbonate, and vinylene carbonate.

Without being bound by any theory, the electrolyte of the present application includes the first additive containing a trimethylsilyl group, which has a high reduction potential and can be reduced prior to the organic solvent and lithium salt in the electrolyte, forming a dense, uniform, and stable interface film on the anode surface. After adding of the first additive containing a trimethylsilyl group, the film formed on the anode surface is thin, effectively reducing the initial DCR of the battery and improving initial power performance.

Without being bound by any theory, the third additive in the electrolyte of the present application similarly has a high reduction potential, can be reduced prior to the organic solvent and lithium salt in the electrolyte, and participates in anode interface film formation, thereby addressing the issue of insufficient film formation by the first additive and avoiding the accumulation of inert substances unfavorable to lithium-ion transport on the anode surface due to side reactions such as electrolyte decomposition. Additionally, the third additive has high stability and does not produce gas during the interface film formation process, thus not affecting the cycling performance and storage performance of the battery.

Without being bound by any theory, the second additive in the present application can form a dense and stable interface film on the surface of the cathode active material prior to the organic solvent, suppressing oxidative decomposition of the organic solvent at the positive electrode and reducing the consumption of active lithium caused by side reactions between the cathode active material and the electrolyte, thus effectively preventing direct contact between the organic solvent and the cathode active material. Furthermore, the presence of the interface film also helps reduce the dissolution of transition metals from the cathode active material.

The combined use of the first additive, the second additive, and the third additive not only enables the formation of dense, stable, and uniform interface films at the cathode and anode interfaces but also suppresses side reactions at the cathode and anode, reducing the consumption of active lithium. Therefore, the electrolyte of the present application enables the battery to achieve excellent power performance, cycling performance, and storage performance.

In the present application, the usage amounts of the first additive, the second additive, and the third additive can affect the film formation effects at the cathode and anode, thereby influencing various battery performance.

In some embodiments, a mass percentage W1 of the first additive in the electrolyte satisfies $0.05\% \leq W1 \leq 0.5\%$. In some embodiments, the first additive satisfies $0.05\% \leq W1 \leq 0.3\%$, $0.15\% \leq W1 \leq 0.5\%$, $0.15\% \leq W1 \leq 0.3\%$, or $0.3\% \leq W1 \leq 0.5\%$. In some embodiments, the mass percentage W1 of the first additive is 0.08%, 0.1%, 0.12%, 0.17%, 0.2%, 0.25%, 0.35%, 0.4%, or 0.45%.

If the usage amount of the first additive in the electrolyte is too high, its low boiling point may lead to a reduction in the overall flash point of the electrolyte, adversely affecting the safety performance of the battery. If the percentage of the first additive in the electrolyte is too low, it cannot effectively modify the SEI film on the negative electrode, failing to reduce the initial interface impedance of the battery and improve power performance.

In some embodiments, a mass percentage W2 of the second additive in the electrolyte satisfies $0.01\% \leq W2 \leq 1\%$. In some embodiments, the mass percentage W2 of the second additive in the electrolyte satisfies $0.05\% \leq W2 \leq 1\%$, $0.08\% \leq W2 \leq 1\%$, $0.3\% \leq W2 \leq 1\%$, $0.6\% \leq W2 \leq 1\%$, $0.05\% \leq W2 \leq 0.6\%$, $0.08\% \leq W2 \leq 0.6\%$, $0.3\% \leq W2 \leq 0.6\%$, or $0.05\% \leq W2 \leq 0.8\%$. In some embodiments, the mass percentage W2 of the second additive in the electrolyte is 0.1%, 0.2%, 0.4%, 0.7%, 0.8%, or 0.9%.

If the percentage of the second additive in the electrolyte is too high, it may deteriorate the conductivity of the electrolyte, reducing the kinetic performance of the electrolyte. If the percentage of the second additive in the electrolyte is too low, it cannot effectively form a film on the positive electrode, failing to suppress side reactions at the positive electrode interface during use.

In some embodiments, a mass percentage W3 of the third additive in the electrolyte satisfies $0.1\% \leq W3 \leq 2\%$. In some embodiments, the third additive satisfies $0.1\% \leq W3 \leq 1.2\%$, $0.3\% \leq W3 \leq 2\%$, $0.4\% \leq W3 \leq 1.2\%$, $0.5\% \leq W3 \leq 1.2\%$, $0.6\% \leq W3 \leq 1.2\%$, $0.3\% \leq W3 \leq 0.9\%$, $0.1\% \leq W3 \leq 0.9\%$, or $0.1\% \leq W3 \leq 0.75\%$. In some embodiments, the mass percentage W3 of the third additive in the electrolyte is 0.5%, 0.35%, 0.45%, 0.55%, 0.8%, 1%, 1.1%, 1.5%, or 1.8%.

If the percentage of the third additive in the electrolyte is too high, it may cause the negative electrode film to become too thick, increasing the anode interface impedance. If the percentage of the third additive in the electrolyte is too low, it cannot effectively suppress side reactions at the negative electrode or protect the negative electrode.

In some embodiments, a ratio of the mass percentage W2 of the second additive in the electrolyte to the mass percentage W1 of the first additive in the electrolyte is 0.02-20. In some embodiments, the ratio of W2 to W1 is 1-20. In some embodiments, the ratio of the mass percentage W2 of the second additive in the electrolyte to the mass percentage W1 of the first additive in the electrolyte is 0.2-20, 0.3-20, 1.6-20, 2-20, 3-20, 4-20, 5-20, 10-20, or 12-20.

Controlling the ratio of the mass percentage W2 of the second additive in the electrolyte to the mass percentage W1 of the first additive in the electrolyte within a suitable range helps reduce the usage amount of additives in the electrolyte, avoiding deterioration of the electrolyte's conductivity. At the same time, it enables the formation of a dense, stable, and uniform interface film at the cathode interface and a uniform thin interface film at the anode interface, suppressing side reactions at the cathode and the anode, reducing the consumption of active lithium, and enabling the battery to achieve excellent conductivity, power performance, cycling performance, and storage performance.

In the present application, the relationship between the amounts of the first additive and the third additive can affect the film formation effect, film thickness, and impedance at the anode interface, ultimately influencing the power performance of the battery.

In some embodiments, a ratio of the mass percentage W3 of the third additive in the electrolyte to the mass percentage W1 of the first additive in the electrolyte is 0.2-40. In some embodiments, the ratio of W3 to W1 is 2-20. In some embodiments, the ratio of the mass percentage W3 of the third additive in the electrolyte to the mass percentage W1 of the first additive in the electrolyte is 1-40, 1.2-40, 2-40, 2.5-40, 3-40, 6-40, 1-20, 1.2-20, 2.5-20, 3-20, or 6-20.

Controlling the ratio of the mass percentage W3 of the third additive in the electrolyte to the mass percentage W1 of the first additive in the electrolyte within a suitable range enables the formation of dense, stable, and uniform interface films at the cathode and anode interfaces, suppresses anode side reactions, reduces the consumption of active lithium, and does not excessively affect the anode interface impedance, effectively protecting the anode and enabling the battery to achieve excellent initial power performance.

In some embodiments, the additives satisfy at least one of the following conditions:

$$(1)\ 0.05\% \leq W1 \leq 0.5\%;$$

$$(2)\ 0.01\% \leq W2 \leq 1\%;$$

and

$$(3)\ 0.1\% \leq W3 \leq 2\%.$$

In some embodiments, the additives satisfy the following conditions:

$$(1)\ 0.15\% \leq W1 \leq 0.5\%;$$

$$(2)\ 0.01\% \leq W2 \leq 0.6\%;$$

and

$$(3)\ 0.1\% \leq W3 \leq 1.2\%.$$

Controlling the mass percentages of the first additive, the second additive, and the third additive in the electrolyte within suitable ranges enables the electrolyte to provide the battery with excellent power performance, cycling performance, and storage performance.

In some embodiments, the electrolyte further includes an electrolytic salt, such as a lithium salt.

In some embodiments, a total concentration of the electrolytic salt in the electrolyte (based on lithium-ion concentration) is 0.6 mol/L-1.5 mol/L. In some embodiments, a total concentration of the electrolytic salt in the electrolyte is 0.8 mol/L-1.3 mol/L, 0.6 mol/L-1.4 mol/L, 0.6 mol/L-1.3 mol/L, 0.6 mol/L-1.2 mol/L, 0.7 mol/L-1.5 mol/L, 0.8 mol/L-1.5 mol/L, 0.9 mol/L-1.5 mol/L, 0.8 mol/L-1.5 mol/L, 0.8 mol/L-1.4 mol/L, 0.9 mol/L-1.5 mol/L, 0.9 mol/L-1.4 mol/L, or 0.9 mol/L-1.2 mol/L.

When the concentration of the electrolytic salt in the electrolyte is within a suitable range, the electrolyte has appropriate viscosity and excellent ionic conductivity, enabling the battery to achieve excellent power performance, cycling performance, and storage performance.

In some embodiments, the electrolytic salt includes one or more of $LiPF_6$, $LiBF_4$, LiFSI, LiBOB, LiDFOB, $LiPO_2F_2$, LiDFOP, LiTFOP, $LiAsF_6$, $Li(FSO_2)_2N$, $LiCF_3SO_3$, and $LiClO_4$.

In some embodiments, the electrolytic salt includes $LiPF_6$ and/or LiFSI.

In some embodiments, the electrolytic salt includes $LiPF_6$ and LiFSI, with a molar ratio of $LiPF_6$ to LiFSI being (2-6):1.

The electrolyte for the lithium-ion battery provided by the present application can form high-performance passivation films at the anode and cathode interfaces of the lithium-ion battery. For example, $LiPF_6$ has poor thermal stability and is prone to decomposition, producing HF, which increases the acid percentage of the electrolyte. The first additive, trimethylfluorosilane, can bind to protonic hydrogen in HF, reducing the acid percentage in the electrolyte, effectively protecting the anode and cathode. This not only suppresses the growth of direct current resistance (DCR) during cycling, improving power performance, but also significantly improves cycling performance and storage performance.

[Lithium secondary battery]

The present application provides a lithium secondary battery, including a positive electrode plate, a separator, a negative electrode plate, and the electrolyte of any embodiment.

In some embodiments, a compacted density of a film layer of the positive electrode plate is 3.0 g/cm³ or higher, and may be 3.0 g/cm³-3.8 g/cm³. In some embodiments, the compacted density of the film layer of the positive electrode plate is 3.2 g/cm³-3.6 g/cm³. In some embodiments, the compacted density of the film layer of the positive electrode plate is 3.2 g/cm³-3.5 g/cm³, 3.3 g/cm³-3.6 g/cm³, or 3.3 g/cm³-3.5 g/cm³.

When the compacted density of the film layer of the positive electrode plate is within a suitable range, it helps reduce side reactions at the electrode interface while also helping to increase the energy density of the secondary battery. If the compacted density of the film layer of the positive electrode plate is too high, the number of lithium-ion transport channels decreases, increasing the impedance of the positive electrode plate, and leading to greater battery polarization and easy oxidative decomposition of the electrolyte. If the compacted density of the film layer of the positive electrode plate is too low, the active specific surface area of the positive electrode active material is large, increasing the reaction area and side reactions, which is detrimental to battery performance.

In the lithium secondary battery of the present application, the positive electrode plate includes a positive electrode current collector and a positive electrode film layer disposed on at least one surface of the positive electrode current collector and including a positive electrode active material. For example, the positive electrode current collector has two opposing surfaces in its thickness direction, and the positive electrode film layer is disposed on either or both of the two opposing surfaces of the positive electrode current collector.

In some embodiments, the positive electrode film layer includes a positive electrode active material, where the positive electrode active material may include one or more of lithium transition metal oxides, lithium-containing phosphates with an olivine structure, and their respective modified compounds. In the secondary battery of the present application, the modified compounds of the positive electrode active materials may be obtained by subjecting the positive electrode active materials to doping modification, surface coating modification, or both doping modification and surface coating modification.

As an example, lithium transition metal oxides may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. As an example, lithium-containing phosphates with an olivine structure may include one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their modified compounds. These positive electrode active materials may be used alone or in combination of two or more.

In some embodiments, the positive electrode active material may include one or more of lithium-containing phosphates with an olivine structure and their modified compounds. In some other embodiments, the positive electrode active material may be one or more of lithium-containing phosphates with an olivine structure and their modified compounds. Using these positive electrode active materials in the positive electrode film layer can improve the rate performance of the battery while enhancing cycling performance and storage performance. Batteries using these positive electrode active materials have a low operating voltage, generally $\leq 4.3$ V. Within this voltage range, the combination of the first organic solvent and the first additive performs better, further improving the cycling performance and storage performance of the battery.

In some embodiments, the positive electrode active material includes one or more of $Li_d[Ni_xCo_yX1_zM1_{1-x-y-z}]O_2$, $LiMn_2O_4$, $Li_2MnO_3 \cdot (1-a)LiAO_2$, and $LiM2X2O_4$, where $0.1 \leq d \leq 1$, and X1 includes Mn and/or Al; M1 includes one or more of Co, Ni, Mn, Mg, Cu, Zn, Al, Sn, B, Ga, Cr, Sr, V, and Ti, $0 \leq x < 1$, $0 \leq y \leq 1$, $0 \leq z \leq 1$, and $x + y + z \leq 1$; A includes one or more of Ni, Co, and Mn, and $0 < a < 1$; M2 includes one or more of Fe, Mn, Ni, and Co; and X2 in $X2O_4{}^{h-}$ includes one or more of S, P, As, V, Mo, and W, and $h = 2$ or 3.

In some embodiments, the positive electrode active material contains at least Ni, Mn, and Co, with a molar ratio of Ni to (Ni + Mn + Co) being $\geq 0.5$ and $\leq 0.98$, and a molar ratio of Co to (Ni + Mn + Co) being > 0.01.

It can be understood that to increase the energy density of the cell, a high voltage, such as 4.5 V, is typically used. When the cell is fully charged, the positive electrode has high oxidizability, easily oxidizing the electrolyte and consuming limited active lithium ions, thus leading to degraded cell performance. In the embodiments of the present application, the first additive and the second additive can form a film at the negative electrode plate interface, providing a synergistic effect, suppressing side reactions at the negative electrode plate interface, and reducing interface DCR.

In the lithium secondary battery of the present application, the positive electrode film layer typically includes a positive electrode active material, a selectable binder, and a selectable conductive agent. The positive electrode film layer is typically formed by applying a positive electrode slurry onto the positive electrode current collector, followed by drying and cold pressing. The positive electrode slurry is typically formed by dispersing the positive electrode active material, the selectable conductive agent, the selectable binder, and any other components in a solvent and stirring to uniformity. The solvent may be N-methylpyrrolidone (NMP), but is not limited thereto. The types and percentages of the conductive agent and binder may be selected based on actual needs. As an example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. As an example, the conductive agent may include one or more of superconducting carbon, acetylene black, carbon black, Ketjen black, carbon dots, carbon nanotubes, graphene, and carbon nanofibers.

In the lithium secondary battery of the present application, the positive electrode current collector may be a metal foil or a composite current collector. As an example of the metal foil, an aluminum foil may be used as the positive electrode current collector. The composite current collector may include a polymer material substrate and a metal material layer formed on at least one surface of the polymer material substrate. In an example, the metal material may be selected from one or more of aluminum, aluminum alloy, nickel, nickel alloy, titanium, titanium alloy, silver, and silver alloy. As an example, the polymer material substrate may be selected from polypropylene, polyethylene terephthalate, polybutylene terephthalate, polystyrene, polyethylene, and the like.

In some embodiments, the negative electrode active material includes at least one of artificial graphite, natural graphite, soft carbon, hard carbon, mesocarbon microbeads, silicon-based materials, and tin-based materials.

In some embodiments, a compacted density of a film layer of the negative electrode plate is 1.2 g/cm³-2.0 g/cm³. In some embodiments, the compacted density of a film layer of the negative electrode plate is 1.4 g/cm³-1.7 g/cm³, 1.5 g/cm³-1.7 g/cm³, or 1.4 g/cm³-1.6 g/cm³. When the compacted density of the negative electrode active material is within a suitable range, it helps reduce side reactions at the electrode interface while also helping to increase the energy density of the secondary battery.

In the lithium secondary battery of the present application, the negative electrode film layer typically includes a negative electrode active material, a selectable binder, a selectable conductive agent, and other selectable auxiliaries. The negative electrode film layer is typically formed by applying a negative electrode slurry onto the negative electrode current collector, followed by drying and cold pressing. The negative electrode slurry is typically formed by dispersing the negative electrode active material, and the selectable conductive agent, the selectable binder, and other selectable auxiliaries in a solvent and stirring to uniformity. The solvent may be N-methylpyrrolidone (NMP) or deionized water, but is not limited thereto. The types and percentages of the conductive agent and binder may be selected based on actual needs. As an example, the conductive agent may include one or more of superconducting carbon, carbon black (for example, acetylene black or Ketjen black), carbon dots, carbon nanotubes, graphene, and carbon nanofibers. As an example, the binder may include one or more of styrene-butadiene rubber (SBR), water-soluble unsaturated resin (SR-1B), aqueous acrylic resin (for example, polyacrylic acid (PAA), polymethacrylic acid (PMAA), sodium polyacrylate (PAAS)), polyacrylamide (PAM), polyvinyl alcohol (PVA), sodium alginate (SA), and carboxymethyl chitosan (CMCS). Other selectable additives may include thickeners (for example, sodium carboxymethyl cellulose (CMC-Na)), PTC thermistor materials, and the like.

In the lithium secondary battery of the present application, the negative electrode film layer may be disposed on one side of the negative electrode current collector or on both sides simultaneously. For example, the negative electrode current collector has two opposing sides in its thickness direction, and the negative electrode film layer is disposed on either or both of the opposing sides of the negative electrode current collector.

In the lithium secondary battery of the present application, the type of negative electrode current collector may be selected based on actual needs.

In the lithium secondary battery of the present application, the negative electrode current collector may be a metal foil or a composite current collector. For example, a copper foil may be used as the metal foil for the negative electrode current collector. The composite current collector may include a polymer material substrate and a metal material layer formed on at least one surface of the polymer material substrate. As an example, the metal material may be selected from one or more of copper, copper alloy, nickel, nickel alloy, titanium, titanium alloy, silver, and silver alloy. As an example, the polymer material substrate may be selected from polypropylene (PP), polyethylene terephthalate (PET), polybutylene terephthalate (PBT), polystyrene (PS), polyethylene (PE), and the like.

It should be noted that the parameters of the negative electrode film layer (for example, thickness, compacted density) provided in the present application refer to the parameters of the negative electrode film layer on a single side of the negative electrode current collector. When the negative electrode film layer is disposed on both sides of the negative electrode current collector, if the parameters of the negative electrode film layer on either side satisfy the present application, it is considered to fall within the scope of protection of the present application. The ranges of thickness, compacted density, and the like, of the negative electrode film layer described in the present application refer to the parameters of the negative electrode film layer after cold pressing and used for battery assembly.

Additionally, in the lithium secondary battery of the present application, the negative electrode plate does not exclude additional functional layers beyond the negative electrode film layer. For example, in some embodiments, the negative electrode plate of the present application may further include a conductive undercoating layer (for example, composed of a conductive agent and a binder) disposed between the negative electrode current collector and the negative electrode film layer. In other embodiments, the negative electrode plate of the present application may further include a protective layer covering the surface of the negative electrode film layer.

In the lithium secondary battery of the present application, the type of separator may be any well-known porous structure separator with good chemical and mechanical stability.

In some embodiments, the material of the separator may be selected from at least one of glass fiber, non-woven fabric, polyethylene, polypropylene, and polyvinylidene fluoride. The separator may be a single-layer film or a multilayer composite film. When the separator is a multilayer composite film, the materials of each layer may be the same or different.

In some embodiments, the outer packaging of the lithium secondary battery may be a hard shell, such as a hard plastic shell, an aluminum shell, or a steel shell. The outer packaging of the secondary battery may also be a soft pack, such as a pouch-type soft pack. The material of the soft pack may be plastic, such as polypropylene, polybutylene terephthalate, and polybutylene succinate.

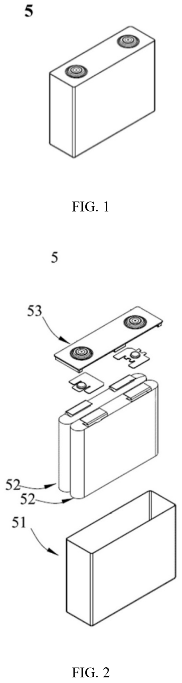

The shape of the battery in the present application includes, but is not limited to, cylindrical, prismatic, or any other shape. For example, FIG. 1 shows a lithium secondary battery 5 with a prismatic structure as an example.

In some embodiments, referring to FIG. 2, the outer packaging may include a housing 51 and a cover plate 53. The housing 51 may include a bottom plate and side plates connected to the bottom plate, where the bottom plate and side plates enclose an accommodating cavity. The housing 51 has an opening communicating with the accommodating cavity, and the cover plate 53 can cover the opening to seal the accommodating cavity. The positive electrode plate, negative electrode plate, and separator may be formed into an electrode assembly 52 through a winding process or a stacking process. The electrode assembly 52 is packaged in the accommodating cavity. The electrolyte infiltrates the electrode assembly 52. The number of electrode assemblies 52 contained in the lithium secondary battery 5 may be one or more, and those skilled in the art may select based on specific actual needs.

In some embodiments, the lithium secondary battery may be assembled into a battery module, where the number of secondary batteries contained in the battery module may be one or more, and the specific number may be selected by those skilled in the art based on the application and capacity of the battery module.

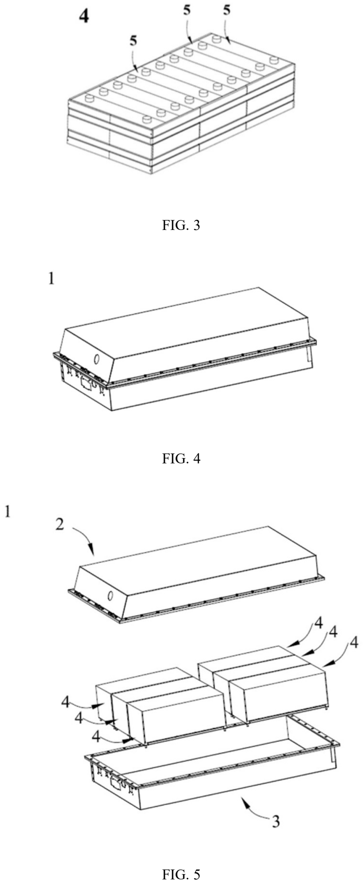

FIG. 3 shows a battery module 4 as an example. Referring to FIG. 3, in the battery module 4, multiple lithium secondary batteries 5 may be sequentially arranged along the length direction of the battery module 4. Certainly, they may also be arranged in any other manner. Further, the multiple lithium secondary batteries 5 may be fixed by fasteners.

Optionally, the battery module 4 may further include a shell with an accommodating space, where the multiple lithium secondary batteries 5 are accommodated in the accommodating space.

In some embodiments, the above battery module may also be assembled into a battery pack, where the number of battery modules contained in the battery pack may be one or more, and the specific number may be selected by those skilled in the art based on the application and capacity of the battery pack.

FIG. 4 and FIG. 5 show a battery pack 1 as an example. Referring to FIG. 4 and FIG. 5, the battery pack 1 may include a battery box and multiple battery modules 4 disposed in the battery box. The battery box includes an upper box body 2 and a lower box body 3, where the upper box body 2 can cover the lower box body 3 to form a closed space for accommodating the battery modules 4. The multiple battery modules 4 may be arranged in the battery box in any manner.

[Electric apparatus]

The present application also provides an electric apparatus, including at least one of the secondary battery, the battery module, or the battery pack provided by the present application. The secondary battery, the battery module, or the battery pack may be used as a power source for the electric apparatus or as an energy storage unit for the electric apparatus. The electric apparatus may include mobile devices (for example, mobile phones or laptops), electric vehicles (for example, pure electric vehicles, hybrid electric vehicles, plug-in hybrid electric vehicles, electric bicycles, electric scooters, electric golf carts, electric trucks), electric trains, ships, satellites, energy storage systems, and the like, but is not limited thereto.

The secondary battery, the battery module, or the battery pack may be selected for the electric apparatus based on the requirements for using the electric apparatus.

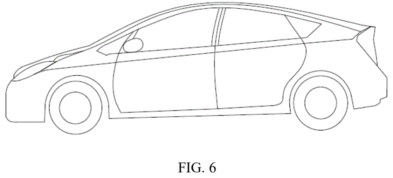

FIG. 6 shows an electric apparatus as an example. The electric apparatus is a pure electric vehicle, a hybrid electric vehicle, a plug-in hybrid electric vehicle, or the like. To meet the high power and high energy density requirements of the electric apparatus for secondary batteries, a battery pack or battery module may be used.

As another example, the apparatus may be a mobile phone, a tablet computer, a laptop, or the like. Such apparatus typically requires thin and lightweight designs, and a secondary battery may be used as the power source.

The following describes examples of the present application. The examples described below are exemplary, intended only to explain the present application, and should not be construed as limiting the present application. Where specific techniques or conditions are not specified in the examples, the techniques or conditions described in the literature in the field or according to product specifications are followed. The reagents or instruments used are all conventional products commercially available if no manufacturer is indicated.

I. Preparation of the Battery

Example 1

(1) Preparation of electrolyte

In an argon environment (water content < 10 ppm, oxygen content < 1 ppm), 0.05 g of trimethylfluorosilane, 0.01 g of lithium difluorophosphate, and 0.1 g of ethylene sulfate were added to 86.76 g of organic solvents ethylene carbonate (EC) and ethyl methyl carbonate (EMC) (EC:EMC = 3:7wt%/wt%), and mixed well to obtain a mixture. To the mixture, 10 g (0.8 mol/L) of $LiPF_6$ and 3.08 g (0.2 mol/L) of LiFSI were slowly added. After the lithium salts were completely dissolved, an electrolyte was obtained.

(2) Preparation of positive electrode plate

A positive electrode active material $LiNi_{0.6}Co_{0.2}Mn_{0.2}O_2$, a conductive agent Super P, and a binder polyvinylidene fluoride (PVDF) were mixed in N-methylpyrrolidone (NMP) to form a positive electrode slurry. A solid content of the positive electrode slurry was 50wt%, with a mass ratio of $LiNi_{0.3}Co_{0.2}Mn_{0.3}O_2$, Super P, and PVDF in solid components being 8:1:1. The positive electrode slurry was applied onto an aluminum foil current collector, dried at 85°C, cold-pressed, then subjected to trimming, cutting, and slitting, and dried under vacuum at 85°C for 4 h to obtain a positive electrode plate.

(3) Preparation of negative electrode plate

Graphite as the negative electrode active material, 3% silicon monoxide (SiO), a conductive agent Super P, a thickener sodium carboxymethyl cellulose (CMC-Na), and a binder styrene-butadiene rubber (SBR) were mixed well in deionized water to form a negative electrode slurry. A solid content of the negative electrode slurry was 30wt%, with a mass ratio of graphite, SiO, Super P, CMC, and binder styrene-butadiene rubber (SBR) in solid components being 80:3:12:3:2. The negative electrode slurry was applied onto a copper foil current collector, dried at 85°C, cold-pressed, then subjected to trimming, cutting, and slitting, and dried under vacuum at 120°C for 12 h to obtain a negative electrode plate.

(4) Separator

A 16 $\mu$m polyethylene (PE) film was used as a separator.

(5) Preparation of battery

The positive electrode plate, the separator, and the negative electrode plate of Example 1 were stacked in order, with the separator placed between the positive and negative electrode plates to isolate them, and wound to obtain a bare cell. Tabs were welded, and the bare cell was placed in an outer packaging. The prepared electrolyte was injected into the dried cell, followed by encapsulation, standing, formation, shaping, and capacity testing processes to obtain the lithium-ion battery product of Example 1 (battery thickness 4.0 mm, width 60 mm, length 140 mm).

In Examples 2-20, the proportions of additives in the electrolyte were adjusted by changing usage amounts of additives and organic solvents, with other parameters kept substantially consistent with Example 1. Specific parameters are shown in Table 1.

In Examples 21-26, the types of the first additive, the second additive, or the third additive were adjusted, with other parameters kept substantially consistent with Example 13. Specific parameters are shown in Table 1.

In Examples 27 and 28, the type of positive electrode active material was adjusted, with other parameters kept substantially consistent with Example 13. Specific parameters are shown in Table 1.

In Example 29, the mass percentages of the first additive, the second additive, and the third additive were adjusted by changing the usage amounts of additives and organic solvents, with other parameters kept substantially consistent with Example 13. Specific parameters are shown in Table 1.

In Comparative Examples 1-3, the composition of the electrolyte was adjusted to include only two of the first additive, the second additive, and the third additive. Specific parameters are shown in Table 1.

II. Test methods

1. Compacted density test of film layer of positive electrode plate

A compacted density of a film layer of a positive electrode plate was calculated. The positive electrode plate with a unit area S was weighed as M1, a mass of an aluminum foil under unit area S was M2, a thickness of the positive electrode plate was measured as H1, and a thickness of the aluminum foil was H2. The compacted density of the film layer of the positive electrode plate was calculated as (M1 - M2)/((H1 - H2) $\times$ S).

2. Compacted density test of film layer of negative electrode plate

A compacted density of a film layer of a negative electrode plate was calculated. The negative electrode plate with a unit area s was weighed as m1, a mass of an aluminum foil under unit area s was m2, a thickness of the negative electrode plate was measured as h1, and a thickness of the aluminum foil was h2. The compacted density of the film layer of the negative electrode plate was calculated as (m1 - m2)/((h1 - h2) $\times$ s).

3. Battery cycling performance

A battery capacity retention rate test process was as follows: At 25°C, the prepared battery was charged at a constant current of 1C to 4.25 V, then charged at a constant voltage of 4.25 V until the current reached 0.05C, rested for 10 min, and discharged at 1C to 2.8 V. The resulting capacity was recorded as an initial capacity C0. The above steps were repeated for the same battery, and a discharge capacity Cn after the nth cycle was recorded. The capacity retention rate after each cycle was calculated as Pn = Cn/C0 $\times$ 100%. 500 points P1, P2, ..., 500 were used as the ordinate and the corresponding cycle numbers as the abscissa, to obtain a curve of the battery capacity retention rate and the cycle number. In this test, the first cycle corresponded to n = 1, the second cycle to n = 2, ..., and the 500th cycle to n = 500. The battery capacity retention rate data corresponding to the examples or comparative examples in Table 1 were measured after 500 cycles under the above test conditions, that is, the value of P500. The test process for the comparative examples and other examples was the same.

4. Battery storage performance

At 25°C, the prepared battery was charged at a constant current of 1C to 4.25 V, then charged at a constant voltage until the current reached 0.05C, rested for 10 min, and discharged at 1C to 2.8 V. The discharge capacity was recorded as D0. The battery was then placed in a 60°C thermostat for 60 days. After removal, once the cell surface temperature returned to room temperature, it was discharged at 1C to 2.8 V, charged at 1C to 4.25 V, charged at a constant voltage to 0.05C, rested for 10 min, and discharged at 1C to 2.8 V. The discharge capacity was recorded as D1. The high-temperature storage capacity retention rate of the battery was calculated as D1/D0 × 100%.

5. Power performance test of lithium-ion battery

The prepared battery was charged at 1C to 4.25 V, then charged at a constant voltage to 0.05C, rested for 30 min, discharged at 1C for 0.5 h, and rested for 30 min. The voltage after resting was recorded as V1. The battery was then discharged at 4C for 30s with a data collection interval of 0.1s, and the voltage at the end of discharge was recorded as V2. The direct current resistance (DCR) of the battery was calculated as DCR = (V1 - V2)/I, where I = 4C.

III. Analysis of test results of examples and comparative examples

Batteries of each example and comparative example were prepared according to the above methods, and various parameters were measured. The results are shown in Table 1 and Table 2 below.

Table 1

| No. | Additive | | | | | | W2/W1 | W3/W1 |
| --- | --- | --- | --- | --- | --- | --- | --- | --- |
| | First additive | Mass percentage of first additive (W1) | Second additive | Mass percentage of second additive (W2) | Third additive | Mass percentage of third additive (W3) | | |
| Example 1 | Trimethylfluorosilane | 0.05% | Lithium difluorophosphate | 1.00% | Ethylene sulfate | 1.00% | 20.00 | 20.00 |
| Example 2 | Trimethylfluorosilane | 0.15% | Lithium difluorophosphate | 1.00% | Ethylene sulfate | 1.00% | 6.67 | 6.67 |
| Example 3 | Trimethylfluorosilane | 0.30% | Lithium difluorophosphate | 1.00% | Ethylene sulfate | 1.00% | 3.33 | 3.33 |
| Example 4 | Trimethylfluorosilane | 0.50% | Lithium difluorophosphate | 1.00% | Ethylene sulfate | 1.00% | 2.00 | 2.00 |
| Example 5 | Trimethylfluorosilane | 0.05% | Lithium difluorophosphate | 0.01% | Ethylene sulfate | 0.10% | 0.20 | 2.00 |
| Example 6 | Trimethylfluorosilane | 0.05% | Lithium difluorophosphate | 0.05% | Ethylene sulfate | 0.10% | 1.00 | 2.00 |
| Example 7 | Trimethylfluorosilane | 0.05% | Lithium difluorophosphate | 0.08% | Ethylene sulfate | 0.10% | 1.60 | 2.00 |
| Example 8 | Trimethylfluorosilane | 0.05% | Lithium difluorophosphate | 0.60% | Ethylene sulfate | 0.10% | 12.00 | 2.00 |
| Example 9 | Trimethylfluorosilane | 0.05% | Lithium difluorophosphate | 1.00% | Ethylene sulfate | 0.10% | 20.00 | 2.00 |
| Example 10 | Trimethylfluorosilane | 0.30% | Lithium difluorophosphate | 0.30% | Ethylene sulfate | 0.10% | 1.00 | 0.33 |
| Example 11 | Trimethylfluorosilane | 0.30% | Lithium difluorophosphate | 0.30% | Ethylene sulfate | 0.60% | 1.00 | 2.00 |
| Example 12 | Trimethylfluorosilane | 0.30% | Lithium difluorophosphate | 0.30% | Ethylene sulfate | 0.75% | 1.00 | 2.50 |
| Example 13 | Trimethylfluorosilane | 0.30% | Lithium difluorophosphate | 0.30% | Ethylene sulfate | 0.90% | 1.00 | 3.00 |

| No. | Additive | | | | | | W2/W1 | W3/W1 |
| --- | --- | --- | --- | --- | --- | --- | --- | --- |
| | First additive | Mass percentage of first additive (W1) | Second additive | Mass percentage of second additive (W2) | Third additive | Mass percentage of third additive (W3) | | |
| Example 14 | Trimethylfluorosilane | 0.30% | Lithium difluorophosphate | 0.30% | Ethylene sulfate | 1.20% | 1.00 | 4.00 |
| Example 14 | Trimethylfluorosilane | 0.30% | Lithium difluorophosphate | 0.30% | Ethylene sulfate | 1.20% | 1.00 | 4.00 |
| Example 15 | Trimethylfluorosilane | 0.30% | Lithium difluorophosphate | 0.30% | Ethylene sulfate | 2.00% | 1.00 | 6.67 |
| Example 16 | Trimethylfluorosilane | 0.05% | Lithium difluorophosphate | 1.00% | Ethylene sulfate | 2.00% | 20.00 | 40.00 |
| Example 17 | Trimethylfluorosilane | 0.50% | Lithium difluorophosphate | 0.01% | Ethylene sulfate | 0.10% | 0.02 | 0.20 |
| Example 18 | Trimethylfluorosilane | 0.05% | Lithium difluorophosphate | 0.01% | Ethylene sulfate | 0.05% | 0.20 | 1.00 |
| Example 19 | Trimethylfluorosilane | 0.30% | Lithium difluorophosphate | 1.20% | Ethylene carbonate | 0.75% | 4.00 | 2.50 |
| Example 20 | Trimethylfluorosilane | 1.00% | Lithium difluorophosphate | 0.30% | Ethylene sulfate | 1.20% | 0.30 | 1.20 |
| Example 21 | Tris(trimethylsilyl) phosphate | 0.30% | Lithium difluorophosphate | 0.30% | Ethylene sulfate | 0.90% | 1.00 | 3.00 |
| Example 22 | Trimethylfluorosilane | 0.30% | Lithium difluorobis(oxalato)phosphate | 0.30% | Ethylene sulfate | 0.90% | 1.00 | 3.00 |
| Example 23 | Trimethylfluorosilane | 0.30% | Lithium difluorophosphate | 0.30% | Fluoroethylene carbonate | 0.90% | 1.00 | 3.00 |
| Example 24 | Trimethylfluorosilane | 0.30% | Lithium difluorophosphate | 0.30% | 1,3-propane sultone | 0.90% | 1.00 | 3.00 |
| Example 25 | Trimethylfluorosilane | 0.30% | Lithium fluorosulfonate | 0.30% | Fluoroethylene carbonate | 0.90% | 1.00 | 3.00 |

(continued)

| No. | Additive | | | | | | | |
|---|---|---|---|---|---|---|---|---|
| | First additive | Mass percentage of first additive (W1) | Second additive | Mass percentage of second additive (W2) | Third additive | Mass percentage of third additive (W3) | W2/W1 | W3/W1 |
| Example 26 | Trimethylfluorosilane | 0.30% | Lithium fluorosulfonate | 0.30% | Vinylene carbonate | 0.90% | 1.00 | 3.00 |
| Example 27 | Trimethylfluorosilane | 0.30% | Lithium fluorosulfonate | 0.30% | Ethylene sulfate | 0.90% | 1.00 | 3.00 |
| Example 28 | Trimethylfluorosilane | 0.30% | Lithium fluorosulfonate | 0.30% | 1,3-propane sultone | 0.90% | 1.00 | 3.00 |
| Example 29 | Trimethylfluorosilane | 0.10% | Lithium difluorophosphate | 0.10% | Ethylene sulfate | 0.10% | 1.00 | 1.00 |
| Comparative Example 1 | Trimethylfluorosilane | 0.30% | Lithium difluorophosphate | / | Ethylene sulfate | 0.90% | / | 3.00 |
| Comparative Example 2 | Trimethylfluorosilane | 0.30% | Lithium difluorophosphate | 0.30% | / | / | 1.00 | / |
| Comparative Example 3 | Trimethylfluorosilane | / | Lithium difluorophosphate | 0.30% | Ethylene sulfate | 0.90% | / | / |

Table 2

| | No. | Secondary battery | | Battery performance | | | |
|---|---|---|---|---|---|---|---|
| | | Positive electrode active material | Compacted density of positive electrode plate $(g/cm^3)$ | DCR (mohm) | Cycling performance | Storage performance | High-temperature storage volume swelling rate |
| | Example 1 | $Li[Ni_{0.6}Co_{0.2}Mn_{0.2}]O_2$ | 3.5 | 34 | 92.20% | 91.10% | 10% |
| | Example 2 | $Li[Ni_{0.6}Co_{0.2}Mn_{0.2}]O_2$ | 3 | 36 | 92.50% | 91.40% | 8% |
| | Example 3 | $Li[Ni_{0.6}Co_{0.2}Mn_{0.2}]O_2$ | 3.3 | 37 | 93.30% | 93.20% | 8% |
| | Example 4 | $Li[Ni_{0.6}Co_{0.2}Mn_{0.2}]O_2$ | 3.8 | 40 | 93.70% | 93.00% | 3.50% |
| | Example 5 | $Li[Ni_{0.5}Co_{0.2}Mn_{0.3}]O_2$ | 3.5 | 26 | 90.30% | 90.00% | 11.30% |
| | Example 6 | $Li[Ni_{0.5}Co_{0.2}Mn_{0.3}]O_2$ | 3.4 | 23 | 91.20% | 92.30% | 9.00% |
| | Example 7 | $Li[Ni_{0.5}Co_{0.2}Mn_{0.3}]O_2$ | 3.6 | 22 | 93.50% | 93.10% | 8.30% |
| | Example 8 | $Li[Ni_{0.5}Co_{0.2}Mn_{0.3}]O_2$ | 3.4 | 20 | 94.40% | 94.10% | 7.60% |
| | Example 9 | $Li[Ni_{0.5}Co_{0.2}Mn_{0.3}]O_2$ | 3.5 | 29 | 94.00% | 93.60% | 8.00% |
| | Example 10 | $Li[Ni_{0.8}Co_{0.1}Mn_{0.1}]O_2$ | 3.4 | 19 | 94.30% | 94.00% | 7.70% |
| | Example 11 | $Li[Ni_{0.8}Co_{0.1}Mn_{0.1}]O_2$ | 3.4 | 23 | 96.00% | 94.50% | 4.30% |
| | Example 12 | $Li[Ni_{0.8}Co_{0.1}Mn_{0.1}]O_2$ | 3.5 | 18 | 98.30% | 97.50% | 2.30% |
| | Example 13 | $Li[Ni_{0.8}Co_{0.1}Mn_{0.1}]O_2$ | 3.5 | 16 | 98.60% | 97.80% | 1.00% |
| | Example 14 | $Li[Ni_{0.8}Co_{0.1}Mn_{0.1}]O_2$ | 3.6 | 17 | 98.00% | 97.00% | 2.00% |
| | Example 15 | $Li[Ni_{0.8}Co_{0.1}Mn_{0.1}]O_2$ | 3.5 | 18 | 97.60% | 96.80% | 2.20% |
| | Example 16 | $Li[Ni_{0.90}Co_{0.05}Mn_{0.05}]O_2$ | 3.5 | 38 | 91.90% | 90.80% | 11.00% |
| | Example 17 | $Li[Ni_{0.90}Co_{0.05}Mn_{0.05}]O_2$ | 3.4 | 42 | 93.50% | 92.80% | 4.40% |
| | Example 18 | $Li[Ni_{0.85}Co_{0.1}Mn_{0.05}]O_2$ | 3.3 | 50 | 83.40% | 81.90% | 13.20% |
| | Example 19 | $Li[Ni_{0.97}Co_{0.01}Mn_{0.02}]O_2$ | 3.3 | 52 | 83.80% | 82.50% | 14.10% |
| | Example 20 | $Li[Ni_{0.97}Co_{0.01}Mn_{0.02}]O_2$ | 3.8 | 48 | 84.50% | 83.10% | 14.90% |
| | Example 21 | $Li[Ni_{0.85}Co_{0.1}Mn_{0.05}]O_2$ | 3.5 | 17 | 98.40% | 97.50% | 1.50% |
| | Example 22 | $Li[Ni_{0.87}Co_{0.07}Mn_{0.06}]O_2$ | 3.6 | 16 | 98.50% | 97.20% | 1.30% |
| | Example 23 | $Li[Ni_{0.92}Co_{0.02}Mn_{0.06}]O_2$ | 3.4 | 15 | 98.70% | 97.60% | 2.50% |
| | Example 24 | $Li[Ni_{0.92}Co_{0.02}Mn_{0.06}]O_2$ | 3.4 | 17 | 98.60% | 98.00% | 1.40% |
| | Example 25 | $Li[Ni_{0.97}Co_{0.01}Mn_{0.02}]O_2$ | 3.5 | 17 | 98.40% | 97.50% | 2.50% |
| | Example 26 | $Li[Ni_{0.97}Co_{0.01}Mn_{0.02}]O_2$ | 3.3 | 16 | 98.30% | 97.50% | 2.70% |
| | Example 27 | $Li[Ni_{0.97}Co_{0.01}Mn_{0.02}]O_2$ | 3.3 | 15 | 98.50% | 97.60% | 1.80% |
| | Example 28 | $Li[Ni_{0.97}Co_{0.01}Mn_{0.02}]O_2$ | 3.6 | 16 | 98.45% | 97.10% | 2.10% |
| | Example 29 | $Li[Ni_{0.6}Co_{0.2}Mn_{0.2}]O_2$ | 3.4 | 32 | 90.60% | 90.30% | 11.50% |
| | Comparative Example 1 | $Li[Ni_{0.6}Co_{0.2}Mn_{0.2}]O_2$ | 3.4 | 48 | 78.90% | 81.30% | 19.30% |
| | Comparative Example 2 | $Li[Ni_{0.6}Co_{0.2}Mn_{0.2}]O_2$ | 3.2 | 46 | 78.50% | 80.10% | 19.80% |
| | Comparative Example 3 | $Li[Ni_{0.6}Co_{0.2}Mn_{0.2}]O_2$ | 3.4 | 55 | 79.30% | 79.90% | 20.10% |

According to the above results, it can be known that the lithium-ion batteries in Examples 1-29 all contain the first additive, the second additive, and the third additive. The first additive includes one of trimethylfluorosilane and tris(trimethylsilyl) phosphate, the second additive includes one of lithium difluorophosphate, lithium fluorosulfonate, and lithium difluorobis(oxalato)phosphate, and the third additive includes one of vinylene carbonate, ethylene sulfate, fluoroethylene carbonate, and 1,3-propane sultone.

From Examples 1-4, it can be seen that when the mass percentage of the first additive is in the range of 0.05%-0.5%, the prepared battery can achieve cycling performance and storage performance of no less than 90% and a DCR of no higher than 45 mohm. From Examples 2-4, it can be seen that when the mass percentage of the first additive is in the range of 0.15%-0.5%, the cycling performance and storage performance can be further improved.

From Examples 5-9, it can be seen that when the mass percentage of the second additive is in the range of 0.01%-1%, the prepared battery can achieve cycling performance and storage performance of no less than 90% and a DCR of no higher than 45 mohm. From Examples 5-8, it can be seen that when the mass percentage of the second additive is in the range of 0.01%-0.6%, it is beneficial to further reducing the DCR of the battery.

From Examples 10-15, it can be seen that when the mass percentage of the third additive is in the range of 0.1%-2%, the prepared battery can achieve cycling performance of no less than 94%, storage performance of no less than 94%, and a DCR of no higher than 25 mohm. From Examples 10-14, it can be seen that when the mass percentage of the third additive is in the range of 0.1%-1.2%, it can balance the DCR, cycling performance, storage performance, and high-temperature storage volume swelling rate of the prepared battery.

From Examples 21-24, it can be seen that when the first additive is adjusted to tris(trimethylsilyl) phosphate, the second additive is adjusted to lithium difluorobis(oxalato)phosphate, and the third additive is adjusted to fluoroethylene carbonate or 1,3-propane sultone, the prepared batteries can achieve cycling performance and storage performance of no less than 95% and a DCR of no higher than 20 mohm.

From Examples 25-28, it can be seen that when the second additive is adjusted to lithium fluorosulfonate, the third additive is adjusted to fluoroethylene carbonate, vinylene carbonate, ethylene sulfate, or 1,3-propane sultone, and the positive electrode active material is $Li[Ni_{0.97}Co_{0.01}Mn_{0.02}]O_2$, the prepared batteries exhibit excellent performance, achieving cycling performance and storage performance of no less than 95% and a DCR of no higher than 20 mohm.

From Examples 1-29, it can be seen that controlling the ratio of the mass percentage W2 of the second additive in the electrolyte to the mass percentage W1 of the first additive in the electrolyte to satisfy 0.02-20, and the ratio of the mass percentage W3 of the third additive in the electrolyte to the mass percentage W1 of the first additive in the electrolyte to satisfy 0.2-40, results in prepared batteries with lower DCR, better cycling performance and storage performance.

In Comparative Examples 1-3, the use of the first additive, the second additive, or the third additive was reduced, and the cycling performance and storage performance of the batteries were not higher than 90%. Compared with Examples 1-29, it can be seen that the simultaneous use of the three additives in the electrolyte can effectively reduce the DCR of the battery and improve the power performance, cycling performance, and storage performance of the battery.

It should be noted that the present application is not limited to the foregoing embodiments. The above embodiments are merely exemplary, and embodiments having substantially the same technical concept and achieving the same effects within the scope of the technical solutions of the present application are included in the technical scope of the present application. Additionally, without departing from the gist of the present application, various modifications that can be conceived by those skilled in the art applied to the embodiments and other forms constructed by combining some of the constituent elements of the embodiments are also included in the scope of the present application.

**Claims**

1. An electrolyte for a lithium secondary battery, **characterized by** comprising additives, wherein the additives comprise a first additive containing a trimethylsilyl group, a second additive containing lithium ions, and a third additive containing an ester group.

2. The electrolyte according to claim 1, **characterized in that** the first additive comprises trimethylfluorosilane and/or tris(trimethylsilyl) phosphate;

   the second additive comprises one or more of lithium difluorophosphate, lithium fluorosulfonate, and lithium difluorobis(oxalato)phosphate; and
   the third additive comprises a sulfur-containing compound and/or a cyclic carbonate compound.

3. The electrolyte according to claim 1 or 2, **characterized in that** the third additive comprises one or more of ethylene sulfate, 1,3-propane sultone, fluoroethylene carbonate, and vinylene carbonate.

4. The electrolyte according to any one of claims 1 to 3, **characterized in that** a ratio of a mass percentage W2 of the second additive in the electrolyte to a mass percentage W1 of the first additive in the electrolyte is 0.02-20.

5. The electrolyte according to any one of claims 1 to 4, **characterized in that** a ratio of a mass percentage W2 of the second additive in the electrolyte to a mass percentage W1 of the first additive in the electrolyte is 1-20.

6. The electrolyte according to any one of claims 1 to 5, **characterized in that** a ratio of a mass percentage W3 of the third additive in the electrolyte to the mass percentage W1 of the first additive in the electrolyte is 0.2-40.

7. The electrolyte according to any one of claims 1 to 6, **characterized in that** a ratio of the mass percentage W3 of the third additive in the electrolyte to the mass percentage W1 of the first additive in the electrolyte is 2-20.

8. The electrolyte according to any one of claims 1 to 7, **characterized in that** the mass percentage W1 of the first additive in the electrolyte, the mass percentage W2 of the second additive in the electrolyte, and the mass percentage W3 of the third additive in the electrolyte satisfy at least one of the following conditions:

$$(1)\ 0.05\% \leq W1 \leq 0.5\%;$$

$$(2)\ 0.01\% \leq W2 \leq 1\%;$$

and

$$(3)\ 0.1\% \leq W3 \leq 2\%.$$

9. The electrolyte according to any one of claims 1 to 8, **characterized in that** the mass percentage W1 of the first additive in the electrolyte, the mass percentage W2 of the second additive in the electrolyte, and the mass percentage W3 of the third additive in the electrolyte satisfy the following conditions:

$$(1)\ 0.15\% \leq W1 \leq 0.5\%;$$

$$(2)\ 0.01\% \leq W2 \leq 0.6\%;$$

and

$$(3)\ 0.1\% \leq W3 \leq 1.2\%.$$

10. The electrolyte according to any one of claims 1 to 9, **characterized in that** the electrolyte further comprises an electrolytic salt, and a total concentration of the electrolytic salt is 0.6 mol/L-1.5 mol/L.

11. The electrolyte according to any one of claims 1 to 10, **characterized in that** a total concentration of the electrolytic salt in the electrolyte is 0.8 mol/L-1.3 mol/L.

12. The electrolyte according to any one of claims 1 to 11, **characterized in that** the electrolytic salt comprises one or more of $LiPF_6$, $LiBF_4$, LiFSI, LiBOB, LiDFOB, $LiPO_2F_2$, LiDFOP, LiTFOP, $LiAsF_6$, $Li(FSO_2)_2N$, $LiCF_3SO_3$, and $LiClO_4$.

13. The electrolyte according to any one of claims 1 to 12, **characterized in that** the electrolytic salt comprises one or more of $LiPF_6$ and LiFSI.

14. The electrolyte according to any one of claims 1 to 13, **characterized in that** the electrolytic salt comprises $LiPF_6$ and LiFSI, with a molar ratio of $LiPF_6$ to LiFSI being (2-6):1.

15. A lithium secondary battery, **characterized by** comprising a positive electrode plate, a negative electrode plate, and the electrolyte according to any one of claims 1 to 14.

16. The lithium secondary battery according to claim 15, **characterized in that** the positive electrode plate comprises a positive electrode active material, and the positive electrode active material comprises one or more of $Li_d[Ni_{x-}Co_yX1_zM1_{1-x-y-z}]O_2$, $LiMn_2O_4$, $Li_2MnO_3 \cdot (1-a)LiAO_2$, and $LiM2X2O_4$;

wherein $0.1 \leq d \leq 1$, and X1 comprises Mn and/or Al; M1 comprises one or more of Co, Ni, Mn, Mg, Cu, Zn, Al, Sn, B, Ga, Cr, Sr, V, and Ti, $0 \leq x < 1$, $0 \leq y \leq 1$, $0 \leq z \leq 1$, and $x + y + z \leq 1$; A comprises one or more of Ni, Co, and Mn, and $0 < a < 1$; M2 comprises one or more of Fe, Mn, Ni, and Co; and X2 in $X2O_4^{h-}$ comprises one or more of S, P, As, V, Mo, and W, and h = 2 or 3.

17. The lithium secondary battery according to claim 15 or 16, **characterized in that** a compacted density of a film layer of the positive electrode plate is 3.0 g/cm$^3$-3.8 g/cm$^3$.

18. The lithium secondary battery according to any one of claims 15 to 17, **characterized in that** the negative electrode plate comprises a negative electrode active material, and the negative electrode active material comprises at least one of artificial graphite, natural graphite, soft carbon, hard carbon, mesocarbon microbeads, silicon-based materials, and tin-based materials.

19. The lithium secondary battery according to any one of claims 15 to 18, **characterized in that** a compacted density of a film layer of the negative electrode plate is 1.2 g/cm$^3$-2.0 g/cm$^3$.

20. An electric apparatus, **characterized by** comprising the lithium secondary battery according to any one of claims 15 to 19.

5

FIG. 1

5

FIG. 2

FIG. 3

FIG. 4

FIG. 5

FIG. 6

## INTERNATIONAL SEARCH REPORT

| | |
|---|---|
| International application No. | |
| | **PCT/CN2023/133387** |

**A. CLASSIFICATION OF SUBJECT MATTER**

H01M10/0567(2010.01)i; H01M10/0525(2010.01)n; H01M10/42(2006.01)n

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; ENTXT; IEEE: 电池, 电解液, 添加剂, 三甲基硅, 三甲硅, 三甲基氟硅烷, 二氟磷酸锂, LiPO2F2, LiDFP, LiSO3F, 氟磺酸锂, LiDODFP, 二氟二草酸磷酸锂, 硫酸乙烯酯, 丙磺酸内酯, 氟代碳酸乙烯酯, FEC, 碳酸亚乙烯酯, VC, battery, electrolyte, additives, trimethylsilicon, trimethylfluorosilane, lithium, difluorophosphate, fluorosulfonate, difluorobisoxalate, phosphate, vinyl, sulfate, sultone, fluoroethylene, carbonate, vinylene

**C. DOCUMENTS CONSIDERED TO BE RELEVANT**

| Category* | Citation of document, with indication, where appropriate, of the relevant passages | Relevant to claim No. |
|---|---|---|
| PX | CN 116207351 A (NINGDE CONTEMPORARY AMPEREX TECHNOLOGY CO., LTD.) 02 June 2023 (2023-06-02) claims 1-20, and description, paragraphs 0005-0036 | 1-20 |
| E | CN 117352844 A (NINGDE CONTEMPORARY AMPEREX TECHNOLOGY CO., LTD.) 05 January 2024 (2024-01-05) description, paragraphs 0006-0044 | 1-20 |
| X | CN 110854433 A (SUNWODA ELECTRIC VEHICLE BATTERY CO., LTD.) 28 February 2020 (2020-02-28) description, paragraphs 0003-0071 | 1-20 |
| X | CN 112531212 A (ENVISION POWER TECHNOLOGY (JIANGSU) CO., LTD. et al.) 19 March 2021 (2021-03-19) description, paragraphs [0002]-[0032] | 1-20 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 January 2024** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/133387**

**C.    DOCUMENTS CONSIDERED TO BE RELEVANT**

| Category* | Citation of document, with indication, where appropriate, of the relevant passages | Relevant to claim No. |
|---|---|---|
| Y | CN 112531212 A (ENVISION POWER TECHNOLOGY (JIANGSU) CO., LTD. et al.) 19 March 2021 (2021-03-19)<br>description, paragraphs [0002]-[0032] | 2 |
| X | CN 112054240 A (SUNWODA ELECTRIC VEHICLE BATTERY CO., LTD.) 08 December 2020 (2020-12-08)<br>description, paragraphs 0002-0048 | 1-20 |
| Y | CN 112054240 A (SUNWODA ELECTRIC VEHICLE BATTERY CO., LTD.) 08 December 2020 (2020-12-08)<br>description, paragraphs 0002-0048 | 2 |
| X | CN 114865081 A (A123 SYSTEMS LLC) 05 August 2022 (2022-08-05)<br>description, paragraphs [0002]-[0026] | 1-20 |
| Y | CN 114865081 A (A123 SYSTEMS LLC) 05 August 2022 (2022-08-05)<br>description, paragraphs [0002]-[0026] | 2 |
| Y | CN 110112464 A (SUNWODA ELECTRIC VEHICLE BATTERY CO., LTD.) 09 August 2019 (2019-08-09)<br>description, paragraphs 0003-0009 | 2 |
| Y | CN 110137570 A (SUNWODA HUIZHOU POWER NEW ENERGY CO., LTD.) 16 August 2019 (2019-08-16)<br>description, paragraphs 0006-0012 | 2 |
| A | WO 2022257859 A1 (ZHUHAI COSMX BATTERY CO., LTD.) 15 December 2022 (2022-12-15)<br>entire document | 1-20 |

Form PCT/ISA/210 (second sheet) (July 2022)

## INTERNATIONAL SEARCH REPORT
### Information on patent family members

International application No.

**PCT/CN2023/133387**

| Patent document cited in search report | | | Publication date (day/month/year) | Patent family member(s) | | | Publication date (day/month/year) |
|---|---|---|---|---|---|---|---|
| CN | 116207351 | A | 02 June 2023 | None | | | |
| CN | 117352844 | A | 05 January 2024 | None | | | |
| CN | 110854433 | A | 28 February 2020 | WO | 2021093265 | A1 | 20 May 2021 |
| CN | 112531212 | A | 19 March 2021 | CN | 112531212 | B | 07 December 2021 |
| CN | 112054240 | A | 08 December 2020 | None | | | |
| CN | 114865081 | A | 05 August 2022 | None | | | |
| CN | 110112464 | A | 09 August 2019 | None | | | |
| CN | 110137570 | A | 16 August 2019 | None | | | |
| WO | 2022257859 | A1 | 15 December 2022 | CN | 113410510 | A | 17 September 2021 |

Form PCT/ISA/210 (patent family annex) (July 2022)